# FASCICULE DE BREVET EUROPEEN

(11) **EP 0 241 969 B1**
(45) Date de publication et mention de la délivrance du brevet: **18.05.1994**
(21) Numéro de dépôt: 87200555.8
(22) Date de dépôt: 24.03.1987
(51) Int. Cl.: B60N 2/02

(54) **Fauteuil pour véhicule, notamment automobile**
Sessel für ein Fahrzeug, insbesondere Kraftfahrzeug
Chair for a vehicle, especially motor car

(30) Priorité: 15.04.1986 BE 216532
(43) Date de publication de la demande: 21.10.1987
(73) Titulaire: NEVE DE MEVERGNIES, Marcel, B-6120 Marbaix-la-Tour (BE)
(72) Inventeur: NEVE DE MEVERGNIES, Marcel, B-6120 Marbaix-la-Tour (BE)
(74) Mandataire: Callewaert, Jean

(56) Documents cités:
- EP-A- 0 179 516
- BE-A- 900 876
- DE-C- 1 111 965

## Description

La présente invention est relative à un fauteuil pour véhicule, notamment automobile, tel que défini dans le préambule de la revendication 1. Un tel fauteuil est connu par le BE-A-900 876.

Un des buts essentiels de la présente invention est de présenter un fauteuil du type précité permettant de supprimer ou au moins d'atténuer d'une manière très efficace le mal au dos du passager du véhicule, provoqué par les oscillations verticales du fauteuil, induites par exemple par les inégalités de la route dans le cas d'un véhicule automobile.

Il a été constaté qu'un mauvais choix des caractéristiques de la partie mobile du dossier avait un effet néfaste sur le dos du passager au lieu de l'effet bénéfique recherché.

Si par exemple les fréquences propres du siège chargé du passager et de la partie mobile du dossier sont approximativement égales il se produit un phénomène de résonance, de telle sorte que l'oscillation de la partie mobile du dossier peut avoir une amplitude largement supérieure à celle du siège chargé du passager.

Pour résoudre ce problème il a ainsi été proposé de réaliser un fauteuil dont l'inertie de la partie mobile du dossier était aussi faible que possible.

Quoique des résultats favorables ont été obtenus par cette solution, il a été constaté que la réalisation pratique, surtout à l'échelle industrielle d'un fauteuil répondant à cette exigence, risque d'être assez complexe.

Un des buts essentiels de la présente invention est de proposer un fauteuil du type précité d'une construction très simple qui permet, sans nécessiter des précautions particulières, du point de vue choix de matériaux et agencement des parties constitutives du dossier, de supprimer ou au moins de réduire considérablement le mal au dos du passager.

A cet effet, suivant l'invention, la partie du dossier, contre laquelle s'appuie le dos, est agencée de manière à reposer sur les organes élastiques, qui comprennent au moins un ressort hélicoïdal enfilé sur une tige de guidage s'étendant suivant la direction du mouvement ascendant et descendant précité, cette tige étant fixe par rapport à une partie du dossier et coulissant par rapport à l'autre partie suivant ladite direction.

D'autres détails et particularités de l'invention ressortiront de la description, donnée ci-après, à titre d'exemple non limitatif, d'une forme de réalisation particulière d'un fauteuil suivant l'invention.

La figure 1 est une vue schématique latérale d'un fauteuil suivant cette forme de réalisation particulière de l'invention.

La figure 2 est, à plus grande échelle, une coupe longitudinale d'une partie essentielle du fauteuil suivant cette forme de réalisation particulière.

Dans ces deux figures, les mêmes chiffres de référence concernent des éléments identiques.

L'objet essentiel de la présente invention est de présenter un fauteuil pour véhicule dans lequel l'importance relative de l'effet d'inertie a été modifiée par rapport à celui d'autres facteurs.

En effet, il a été constaté, suivant l'invention, sur base d'essais et de mesures effectuées sur des fauteuils aussi bien à dossier entièrement fixe qu'à dossier dont au moins la partie destinée à venir en contact avec le dos du passager est mobile, que les fréquences les plus nocives pour la colonne vertébrale se situent au-delà de 10 Herz.

Il a aussi été conclu qu'il n'est pas toujours indispensable que la partie mobile du dossier, contre laquelle s'appuie le dos du passager, ait une faible inertie.

Les vibrations auxquelles est soumise la colonne vertébrale d'un passager de véhicule, notamment automobile, sont dues aux vibrations du plancher sur lequel est fixé le fauteuil dans lequel est assis le passager.

Suivant la présent inventon, la qualité principale que doit avoir l'ensemble du fauteuil, c'est-à-dire le siège et le dossier, est que la construction doit être telle que les vibrations du plancher du véhicule, ayant une fréquence supérieure à 10 Hz, n'atteignent pas la colonne vertébrale du passager.

Habituellement, le siège d'un fauteuil de véhicule a une suspension assez souple afin d'assurer le confort du passager. Typiquement, cette suspension a une raideur ou rigidité de 15 à 30 kg/cm. Une telle suspension, chargée d'un passager pesant environ 75 kg, amortit fortement les vibrations ayant une fréquence supérieure à 10 Hz. De plus, la morphologie du corps humain est telle que les parties charnues de l'assise du passager constituent un bon amortisseur pour les fréquences au-delà de 10 Hz. Au total, les vibrations de fréquence supérieure à 10 Hz du plancher d'un véhicule, notamment automobile, ne seront pratiquement pas transmises à la colonne vertébrale du passager par l'intermédiaire de l'assise du fauteuil dans lequel est assis le passager.

Par contre, si le dossier n'est pas mobile ou s'il ne comporte pas de partie mobile pour le dos du passager, les vibrations au-delà de 10 Hz ne sont pas amorties, et ces vibrations du plancher peuvent donc atteindre la colonne vertébrale du passager par l'intermédiaire du dossier.

D'une façon générale, l'invention concerne un fauteuil destiné à être utilisé dans n'importe quel type de véhicule, notamment voiture automobile, autobus, camion, tracteur etc...

Une forme de réalisation particulière d'un fauteuil, suivant l'invention, qui présente les caractéristiques décrites ci-dessus a été représentée aux figures annexées.

Ce fauteuil comprend un siège 1 et un dossier 2, qui est de préférence articulé sur la partie arrière de ce siège.

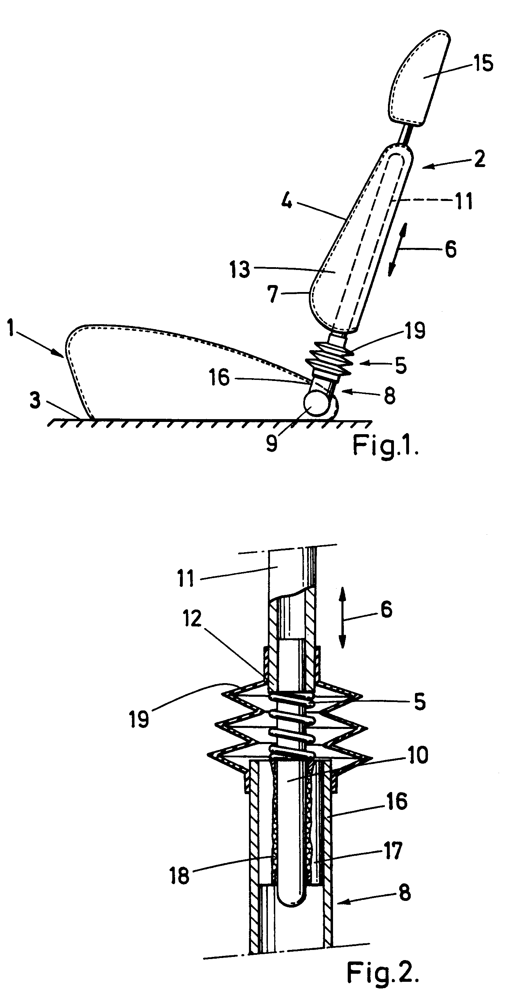

Dans le cas d'une voiture automobile, autobus ou camion, le siège 1 est fixé, éventuellement à coulissement horizontal, sur le plancher 3 du véhicule. Etant donné qu'il s'agit de moyens de fixation traditionnels, ceux-ci n'ont pas été représentés sur la figure 1.

Au moins la partie 4 du dossier 2, contre laquelle s'appuie le dos d'une personne prenant place dans le fauteuil, coopère avec des organes élastiques 5 de manière à permettre ainsi le déplacement de cette partie 4 dans une même direction suivant un mouvement ascendant et descendant, comme indiqué par les flèches 6, par rapport au siège 1.

Ce fauteuil est caractérisé par le fait que les organes élastiques 5 présentent une faible rigidité dont la valeur est inférieure à 1 kg/cm et est, de préférence, comprise entre 0,01 kg/cm et 1 kg/cm.

Dans la forme de réalisation montrée aux figures, la partie 4 du dossier 2, contre laquelle s'appuie le dos, est agencée de manière à reposer sur les organes élastiques 5 et à être guidée suivant la direction 6 du mouvement ascendant et descendant.

Plus particulièrement, pratiquement tout le dossier est monté de manière à pouvoir subir ce mouvement ascendant et descendant par rapport au siège 1.

Ainsi, dans cette forme de réalisation particulière, la partie inférieure du dossier 2 coopère, par l'intremédiaire des organes élastiques 5, avec un support 8 qui est, de préférence, monté sur la partie arrière du siège 1 par l'intermédiaire d'une articulation 9, permettant ainsi de régler l'inclinaison du dossier par rapport au siège.

Comme montré clairement à la figure 2, toujours dans cette forme de réalisation particulière, les organes élastiques 5 sont constitués par un ressort hélicoïdal enfilé sur une tige de guidage 10 s'étendant suivant la direction du mouvement ascendant et descendant du dossier 2, indiqué par la flèche 6.

Une des extrémités de cette tige 10 est fixe par rapport à la partie mobile du dossier 2, l'autre extrémité étant montée à coulissement dans le support 8 suivant la direction des flèches 6.

En pratique, comme montré aux figures, le dossier 2 peut comprendre une armature métallique constituée par exemple par un tube en forme de U renversé 11, dans chacune des deux extrémités libres 12 duquel est fixée une tige 10.

Le support 8 peut être constitué de deux bouts de tube 16, dont l'extrémité inférieure est solidaire de l'articulation 9, de manière à pouvoir être bloqué dans une position angulaire réglable par rapport au siège, et dont l'extrémité supérieure est munie d'une glissière tubulaire 17 à billes 18 dans laquelle peut coulisser la tige 10 avec un minimum de frottement.

Enfin, un manchon 19 en caoutchouc souple relie les extrémités en regard de l'armature 11 et des bouts de tube 16 en recouvrant ainsi le ressort 5 et la tige 10.

Le ressort 5 permet à la partie mobile 4 du dossier d'osciller autour d'un point fixe par rapport au siège 1, ce point fixe correspondant à la position occupée par le dossier lors de l'arrêt du véhicule.

Ainsi, l'appui lombaire 7 de la partie mobile 4 du dossier 2 suivra correctement les mouvements oscillants du dos du passager. Ceci n'est par exemple pas le cas si cette partie mobile est constituée par une simple bande sans fin montée autour de rouleaux à rotation libre.

L'armature 11 peut être garnie d'un coussin façonné 13 en mousse, par exemple, contre lequel le dos peut s'appuyer, ainsi que d'un appui-tête 15 agencé sur la partie supérieure de l'armature 11.

Etant donné la pression exercée par le dos d'une personne assise dans le fauteuil contre la partie 4 du dossier 2, ce dernier suivra exactement le mouvement oscillatoire ascendant et descendant du dos du passager.

Il est bien entendu que l'invention n'est pas limitée à la forme de réalisation décrite ci-dessus et que bien des variantes peuvent être envisagées sans sortir du cadre de la protection revendiquée.

C'est ainsi que, dans certains cas, le dossier n'est pas articulé sur le siège.

## Revendications

1. Fauteuil pour véhicule, notamment automobile, comprenant un siège (1) et un dossier (2), au moins la partie (4) du dossier (2) contre laquelle s'appuie le dos d'une personne prenant place dans le fauteuil étant guidée suivant la direction d'un mouvement ascendant et descendant et coopérant avec des organes élastiques (5) de manière à pouvoir osciller autour d'un point fixe par rapport au siège (1), uniquement suivant ce mouvement ascendant et descendant, des moyens (5) étant prévus pour permettre de limiter la transmission, à partir du siège du fauteuil, de vibrations ayant une fréquence supérieure à 10 Hz vers la partie (4) du dossier contre laquelle s'appuie le dos de la personne susdite, caractérisé en ce que la partie (4) du dossier (2), contre laquelle s'appuie le dos, est agencée de manière à reposer sur les organes élastiques (5), qui comprennent au moins un ressort hélicoïdal enfilé sur une tige de guidage (10) s'étendant suivant la direction du mouvement ascendant et descendant précité, cette tige (10) étant fixe par rapport à une partie du dossier et coulissant par rapport à l'autre partie suivant ladite direction.

2. Fauteuil suivant la revendication 1, caractérisé en ce que les organes élastiques précités (5) présentent une rigidité inférieure à 1 kg/cm, de préférence comprise entre 0,01 et 1 kg/cm.

3. Fauteuil suivant la revendication 1, caractérisé en ce que sensiblement tout le dossier (2) est agencé de manière à pouvoir subir le mouvement ascendant et descendant par rapport au siège (1).

4. Fauteuil suivant la revendication 3, caractérisé en ce que la partie inférieure du dossier (2) coopère par l'intermédiaire des organes élastiques précités (5) avec un support (8) qui est de préférence articulé par rapport à la partie arrière du siège (1).

## Claims

1. A seat for a vehicle, in particular a motor vehicle, comprising a seat (1) and a seatback (2), at least the part (4) of the seatback (2) against which the back of a person sitting in the seat is applied being guided in the direction of an ascending and descending movement, and co-operating with resilient members (5) so as to be able to swing about a fixed point in relation to the seat (1), solely in accordance with this ascending and descending movement, means (5) being provided to make it possible to limit the transmission, from the seat (1), of vibrations having a frequency higher than 10 Hz towards the part (4) of the seatback against which the back of the person is applied, characterised in that the part (4) of the seatback (2), against which the back is applied, is arranged so as to rest on the resilient members (5) which comprise at least one helical spring fitted on a guide rod (10) extending in the direction of the ascending and descending movement, said rod (10) being fixed in relation to one part of the seatback and sliding in relation to the other part in said direction.

2. A seat according to claim 1, characterised in that said resilient members have a rigidity of less than 1 kg/cm, preferably between 0.01 and 1 kg/cm.

3. A seat according to claim 1, characterised in that substantially the entire seatback (2) is arranged so as to be able to undergo the ascending and descending movement in relation to the seat (1).

4. A seat according to claim 3, characterised in that the lower part of the seatback (2) co-operates by means of said resilient members (5) with a support (8) which is preferably articulated in relation to the rear part of the seat (1).

## Patentansprüche

1. Fahrzeugsessel, vor allem für Automobile, umfassend einen Sitz (1) und eine Rückenlehne (2), wobei wenigstens der Teil (4) der Lehne (2), auf dem sich der Rücken einer Person abstützt, die in dem Sessel Platz nimmt, geführt wird in der Richtung einer Auf- und Abwärtsbewegung und zusammenwirkt mit elastischen Organen (5), um schwingen zu können um einen festen Punkt bezüglich des Sitzes (1), ausschließlich entsprechend dieser Auf- und Abwärtsbewegung, wobei Einrichtungen (5) vorgesehen sind, um eine Begrenzung der Übertragung der vom Sitz des Sessel ausgehenden Schwingungen mit einer Frequenz von mehr als 10 Herz auf den Teil (4) der Lehne zu ermöglichen, auf dem der Rücken der oben erwähnten Person sich abstützt,
**dadurch gekennzeichnet**,
daß der Teil (4) der Lehne (2), auf dem sich der Rücken abstützt, so ausgeführt ist, daß er auf zwei elastischen Organen (5) ruht, die wenigstens eine Spiralfeder umfassen, die auf einer Führungsstange (10) sitzt, die sich in der Richtung der vorerwähnten Auf- und Abwärtsbewegung erstreckt, wobei diese Stange (10) feststehend ist bezüglich eines Teils der Lehne und verschiebbar bezüglich des anderen Teils in der genannten Richtung.

2. Sessel nach Anspruch 1, dadurch gekennzeichnet, daß die vorerwähnten elastischen Organe (5) eine Steifigkeit kleiner als 1 kg/cm aufweisen, vorzugsweise enthalten zwischen 0,01 und 1 kg/cm.

3. Sessel nach Anspruch 1, dadurch gekennzeichnet, daß im wesentlichen die ganze Lehne (2) so gestaltet ist, daß sie die Auf- und Abwärtsbewegung bezüglich des Sitzes (1) mitmachen kann.

4. Sessel nach Anspruch 3, dadurch gekennzeichnet, daß der untere Teil der Lehne (2) mittels vorerwähnter elastischer Organe (5) zusammenwirkt mit einer Stütze (8), die vorzugsweise gelenkig ist bezüglich des hinteren Teils des Sitzes (1).
